# EUROPÄISCHE PATENTSCHRIFT

(11) **EP 2 566 603 B1**
(45) Veröffentlichungstag und Bekanntmachung des Hinweises auf die Patenterteilung: **12.03.2014**
(21) Anmeldenummer: 11720737.3
(22) Anmeldetag: 06.05.2011
(51) Int. Cl.: B01D 53/50, B01D 53/62

(54) **VERFAHREN ZUR KATALYTISCHEN ENTFERNUNG VON KOHLENDIOXID UND SCHWEFELDIOXID AUS ABGASEN**
METHOD FOR THE CATALYTIC REMOVAL OF CARBON DIOXIDE AND SULPHUR DIOXIDE FROM EXHAUST GASES
PROCÉDÉ D'ÉLIMINATION CATALYTIQUE DE DIOXYDE DE CARBONE ET DE DIOXYDE DE SOUFRE DE GAZ D'ÉCHAPPEMENT

(30) Priorität: 07.05.2010 LU 91685
(43) Veröffentlichungstag der Anmeldung: 13.03.2013
(73) Patentinhaber: CPPE Carbon Process&Plant Engineering S.A., 1337 Luxembourg-Dommeldange (LU)
(72) Erfinder: STRICKROTH, Alain, L-4251 Esch/Alzette (LU)
(74) Vertreter: Office Freylinger
(86) Internationale Anmeldenummer: PCT/EP2011/057271
(87) Internationale Veröffentlichungsnummer: WO 2011/138425

(56) Entgegenhaltungen:
- EP-A1- 0 779 100
- WO-A1-2010/027335

## Beschreibung

### Technisches Gebiet

Die vorliegende Erfindung betrifft allgemein ein Verfahren zur katalytischen Entfernung von Kohlendioxyd und Schwefeldioxid aus Abgasen.

### Stand der Technik

Die Diskussionen über den Klimawandel haben der Menschheit deutlich vor Augen geführt, dass die Ressourcen, die ihr zu Verfügung stehen, begrenzt sind und dass die durch menschliche Tätigkeiten entstandenen Schadstoffe einen großen Impakt auf die Umwelt haben und das Klima nachhaltig verändern. Nachdem in den siebziger Jahren des zwanzigsten Jahrhunderts die Schwefelemissionen im Mittelpunkt standen, sind jetzt die Kohlendioxydemissionen zum zentralen Thema geworden. Seit einigen Jahren wird intensiv nach Möglichkeiten gesucht, die Entstehung dieses Gas möglichst zu vermeiden oder aber aus der Atmosphäre zu entfernen. Zu dieser letzten Möglichkeit wurden verschiedene Verfahren vorgeschlagen das Kohlendioxyd aus der Atmosphäre an Feststoffe oder Flüssigkeiten zu binden und dann zu lagern. Solche Verfahren sind zum Beispiel aus der W02005108297A, KR200502862 A, W02004098740 A bekannt. Es wurde auch versucht das Kohlendioxyd elektrochemisch zu reduzieren, wobei die elektrische Energie wie in der JP4063115 A beschrieben umweltfreundlich aus Sonnenenergie gewonnen werden kann.

Diese Verfahren haben jedoch den Nachteil, dass sie entweder das Problem nur verlagern oder aber sehr energieintensiv sind.

### Aufgabe der Erfindung

Eine Aufgabe der vorliegenden Erfindung ist es, ein Verfahren bereit zu stellen, das Kohlendioxyd aus Abgasen entfernt.

### Allgemeine Beschreibung der Erfindung

Diese Aufgabe wird erfindungsgemäß gelöst, durch ein Verfahren zur katalytischen Entfernung von Kohlendioxyd und Schwefeldioxid aus Abgasen in einem, mit einem Aktivkohlekatalysator beaufschlagten Reaktor, gekennzeichnet durch die folgenden Schritte:
- Sättigung der Aktivkohle mit SO₂,
- Sättigung oder Teilsättigung der Abgase mit Wasser,
- Einführung der Abgase in den Reaktor,
- katalytische Umwandlung des SO₂ zu H₂SO₄ und parallel dazu die katalytische Umwandlung am selben Katalysator von CO₂ in C und O₂ und/oder eine Anlagerung von C an Schwefelverbindungen.
- Auswaschen des Katalysators und Austragen des H₂SO₄ als Flüssigkeit und C als Feststoff oder/und an Schwefelverbindungen gebunden.

Ein Vorteil des Verfahrens besteht darin, dass die Reaktionsprodukte H₂SO₄ und C aus der Gasphase der Abgase entzogen werden und nach dem Verfahren als Flüssigkeit (H₂SO₄) bzw. als Feststoff (C bzw. C an Schwefelverbindungen) vorliegen und weiter verwendet werden können.

Das Verfahren erlaubt es, Abgase aus industriellen Anlagen zu behandeln, die Kohlendioxyd und SO₂ enthalten und diese beiden Schadstoffe gleichzeitig und parallel, also in einem Verfahren ganz bzw. zu einem erheblichen Teil aus den Abgasen zu entfernen.

Bei dem Verfahren wird mindestens 40% des in den Abgasen enthaltenen CO₂ umgewandelt, bevorzugt mindestens 50%, besonders bevorzugt mindestens 60% und insbesondere mindestens 82%.

Unter Schwefel-Kohlenstoffverbindungen versteht man im Zusammenhang mit der vorliegenden Erfindung Verbindungen die sowohl Schwefel also auch Kohlenstoff enthalten und zwar unabhängig von der Anzahl, der Oxidationsstufe und der Präsenz von anderen Elementen.

Unter dem Begriff Sättigung der Aktivkohle mit SO₂/SO₃ versteht man im Zusammenhang mit der vorliegenden Erfindung, dass der Aktivkohlekatalysator über genügend exotherme Umwandlungsenergie verfügt welche durch die SO₂/SO₃/H₂SO₄ Umwandlung erfolgt um anschliessend mit der CO₂-Umwandlung zu beginnen. Dies entspricht wie aus unseren Versuchen hervorging einer Grössenordnung von 20-50 kg SO₂/m³ Katalysator.

Unter dem Begriff Sättigung der Abgase mit Wasser versteht man im Zusammenhang mit der vorliegenden Erfindung ein Einbringen von feinsten Wassertröpfchen ins Rauchgas welches eine Erniedrigung der Temperatur und eine Zunahme vom Wassergehalt bis zu einer relativen Luftfeuchtigkeit von max 100% im Rauchgas ergibt. Diese Sättigung der Abgase mit Wasser wird bevorzugter Weise in einem Quenchkühler oder Einspritzkühler vorgenommen. Der pH-Wert dieses Wassers kann entweder neutral, basisch oder sauer sein. Der pH-Wert des zur Sättigung der Abgase benutzten Wassers liegt bevorzugter Weise zwischen 3 und 11 und besonders bevorzugt zwischen 5 und 9.

Dieses Verfahren hat eine gewisse Ähnlichkeit mit dem sogenannten SULFACID Verfahren, bei dem SO₂ auf einem Aktivkohlekatalysator in H₂SO₄ umgewandelt wird. Bei diesem Verfahren wird das Kohlendioxyd jedoch nicht in Kohlenstoff und Sauerstoff resp. in Schwefelkohlenstoffverbindungen umgewandelt, da bei diesem Verfahren die erzeugte exotherme Energie bei der Umwandlung von SO₂ über SO₃ zu H₂SO₄ fast komplett an die wässrige Umhüllung im Katalysatorbett abgegeben wird.

Durch die Versuche, die im Zusammenhang mit der Forschung die zu dieser Erfindung geführt haben, gemacht wurden, wurde festgestellt, dass bei allen möglichen konventionellen Fahrweisen vom SULFACID Verfahren keine Abscheidung von CO₂ festgestellt wurde, weder in den Versuchen noch in den industriellen Anwendungen da in diesem Fall die exotherme Energie die bei der Umsetzung von SO₂ über SO₃ zu H₂SO₄ erzeugt wird an die wässrige Umhüllung im Bett abgegeben wird, um somit o.g. H₂SO₄ Säure zu erzeugen.

Vorzugsweise werden Abgase behandelt bei denen das Verhältnis von CO₂ zu SO₂ zwischen 0,25 mol/mol und 0,58 mol/mol liegt. Selbstverständlich ist es auch möglich Abgase zu behandeln, in denen das Verhältnis der beiden Schadstoffe außerhalb dieser Spanne liegt. In einem solchen Fall wird jedoch der Schadstoff, der über der oben angegebenen Grenze liegt, nicht vollständig, sondern nur teilweise aus den Abgasen entfernt.

Die Eingangstemperaturen der Abgase liegen vorzugsweise zwischen der Umgebungstemperatur und 150 °C. Höhere Temperaturen im Dauerbetrieb könnten den Katalysator auf Dauer schädigen.

Der Sauerstoffgehalt der Abgase ist eigentlich nicht kritisch, er sollte jedoch idealerweise mindestens 5 Vol.% betragen. Bevorzugterweise sollte der O₂-Gehalt mehr als 8 mal höher als der SO₂-Gehalt liegen.

Die Sättigung der Abgase mit Wasser kann ganz einfach durch Quenchen oder ein ähnliches Verfahren durchgeführt werden. Die Abgase sollten natürlich sowenig wie möglich Feststoffe, Staub und ähnliches enthalten um eine Vergiftung und Zusetzung des Katalysators zu verhindern. Dieses Entstauben der Abgase wird durch konventionelle Filteranlagen erreicht, bevor die Abgase dann in die Quenche geleitet werden.

Der Abreinigungsfaktor für SO₂ der Abgase mit Hilfe des Katalysators liegt bevozugterweise zwischen 0,4 und 0,6. Es werden demnach zwischen 40% und 60% des SO₂ über SO₃ in H₂SO₄ umgewandelt, der Rest des SO₂/SO₃ reagiert zu Schwefelkohlenstoffverbindunden resp. wird in Form von SO₂/SO₃ in die Abluft abgegeben. Beispiel: Bei einer 100%-igen Abscheidung von SO₂ im CO₂-Prozess entspricht dies einer Umwandlung von 40-60% in H₂SO₄ sowie einer 60-40%-igen Umwandlung in Schwefelkohlenstoffverbindungen (bei einer Überbelastung mit SO₂/SO₃ erfolgt demnach keine 40-60%-ige Umsetzung in H₂SO₄ wobei dann der Überschuss in Form von SO₂/SO₃ in die Abluft abgegeben wird - in diesem Fall wird auch die CO₂ Abscheidung reduziert resp. kommt zum Erliegen). Im SULFACID Prozess wird bei einer 100%-igen Abscheidung von SO₂ eine 70-90%-ige Umsetzung in H₂SO₄ erfolgen sowie eine ca. 30-10% Freigabe von SO₂/SO₃ in die Abluft. Bei einer Überbelastung mit SO₂ /SO₃ im SULFACID Prozess wird die 70-90%-ige Umsetzung in H₂SO₄ nicht vergrößert sondern der Überschuss geht in Form SO₂/SO₃ auch wieder in Abgase ein.

Folglich können im erfindungsgemäßen Verfahren bei großen Volumenströmen und/oder hohen Konzentrationen an SO₂/SO₃/CO₂ mehrere Reaktoren parallel und/oder seriell geschaltet werden um geforderte Werte zu erreichen.

### Kurze Beschreibung der Figuren

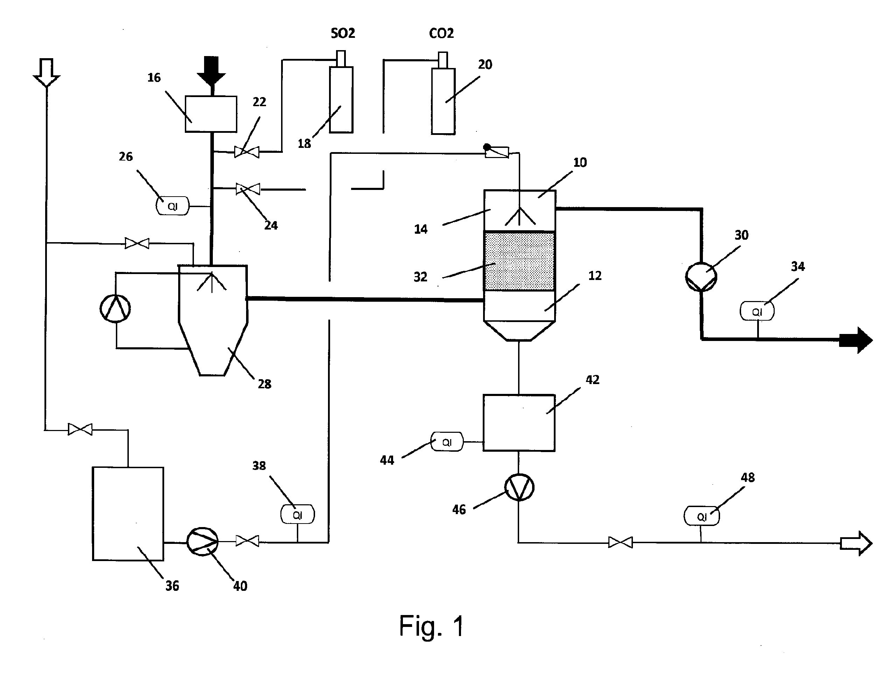

Weitere Einzelheiten und Vorteile der Erfindung können der nachfolgenden ausführlichen Beschreibung einer möglichen Ausführungsform der Erfindung anhand der beiliegenden Figur 1 entnommen werden. Diese zeigt:
Fig. 1 eine schematische Darstellung der Versuchsanordnung,
Fig. 2 eine graphische Darstellung der bei Versuch 1 gemessenen Werte vom SO₂-Gehalt der Abgase am Eintritt bzw. Austritt des Reaktors,
Fig. 3 eine graphische Darstellung der bei Versuch 1 gemessenen Werte vom CO₂-Gehalt der Abgase am Eintritt bzw. Austritt des Reaktors,
Fig. 4 eine graphische Darstellung der bei Versuch 2 gemessenen Werte vom SO₂ -Gehalt der Abgase am Eintritt bzw. Austritt des Reaktors,
Fig. 5 eine graphische Darstellung der bei Versuch 2 gemessenen Werte vom CO₂-Gehalt der Abgase am Eintritt bzw. Austritt des Reaktors.

### Beschreibung einer Ausgestaltung der Erfindung

Die in der Figur 1, zur Illustration der Erfindung, gezeigte Versuchsanordnung umfasst einen Versuchsreaktor 10, in dessen unteren Teil 12, ein Versuchsgas zugeführt wird und in dessen oberen Teil 14 Wasser aufgesprüht wird.

Das Versuchsgas, das benutzt wurde, um die Abgase zu simulieren, besteht aus Umgebungsluft welche in einem Heizgerät 16 auf ca. 80 °C aufgeheizt wird und dem anschließend SO₂ aus einer ersten Druckflasche 18 und CO₂ aus einer zweiten Druckflasche 20 über entsprechende Ventile 22, 24 zudosiert wird. Ein erstes Messgerät 26 analysiert die Zusammensetzung (SO₂- Gehalt, CO₂-Gehalt, O₂-Gehalt), die Temperatur, die Durchflussmenge und die Durchflussgeschwindigkeit des Versuchsgases.

Das Versuchsgas wird dann in einer Quenche 28 durch Verdampfen von Wasser auf Sättigungstemperatur abgekühlt. Das Versuchsgas wird von einem Abgasgebläse 30 über die Quenche 28 in den Versuchsreaktor 10 gesaugt. Ein Tropfenabscheider am Austritt der Quenche 28 sorgt für die Sprühabscheidung.

Das Versuchsgas durchströmt den Versuchsreaktor 10 und den sich darin befindenden Aktivkohlekatalysator 32 von unten nach oben und wird nach Austritt aus dem Versuchsreaktor 10 in einem zweiten Messgerät 34 auf die selben Parameter wie bei dem ersten Messgerät 26, d.h. Zusammensetzung (SO₂-Gehalt, CO₂-Gehalt, O₂-Gehalt), die Temperatur, die Durchflussmenge und die Durchflussgeschwindigkeit, geprüft und anschließend in die Atmosphäre abgegeben.

Das in dem Prozess benötigte Wasser wird aus einem Vorratsbehälter 36 über ein Dossiergerät 38, wo der Durchfluss gemessen wird und eine Pumpe 40 in den oberen Teil 14 des Versuchsreaktors 10 geleitet, wo das Wasser den Aktivkohlekatalysator 32 im Gegenstrom zu dem Versuchsgas durchfließt. Das für die Quenche 28 benötigte Wasser kommt direkt aus der Wasserversorgung und wird im Kreislauf gefahren.

Alternativ kann das in dem Prozess benötigte Wasser aber auch im Gleichstrom d.h. in der selben Richtung wie das Versuchsgas durch den Reaktor geleitet werden. Ob ein Gleichstrom- oder ein Gegenstromevrfahren gewählt wird, hängt z.B. von den örtlichen Begebenheiten ab.

Am Aktivkohlekatalysator, welcher nicht zusätzlich mit Metallen imprägniert ist, wird das SO₂ katalytisch in SO₃ und anschließend in Falle von Wasserzugabe in Schwefelsäure umgewandelt. Die eingesetzten Füllkörper, unterhalb des Molekularsiebes befindlich, die zum Verteilen des Gases dienen und können dotiert sein. Die gebildete Schwefelsäure und der Kohlenstoff resp. Schwefel-Kohlenstoffverbindungen werden von dem Aktivkohlekatalysator durch taktweises Besprühen mit Wasser, in Abhängigkeit von Volumen des Katalysators and der SO₂/SO₃ Konzentration, im Gegenstrom zum Gas, abgespült. Im Falle der Pilotanlage wurde 1-4 mal/Stunde bedüst mit einer Wassermenge von 2-15 I/Stunde. Die Menge an Wasser die gebraucht wird, richtet sich nach der gewünschten Konzentration an Schwefelsäure die jedoch üblicherweise zwischen 5-25 Gew-% liegt. Im unteren Teil 12 des Versuchsreaktors 10 wird das Wasser zusammen mit der im Prozess entstandenen, wässrigen Schwefelsäurelösung und der darin suspendierte Kohlenstoff resp. Kohlenstoff-Schwefelverbindungen in einem Behälter 42 aufgefangen und der Säuregehalt wird mittels eines Messgeräts 44 bestimmt. Anschließend wird die Schwefelsäurelösung durch eine Pumpe 46 abgepumpt und die Durchflussmenge wird mit einem weiteren Messgerät 48 festgestellt.

In der beschriebenen Anlage wird das Schwefeldioxid der Abgase katalytisch an feuchten Katalysatorenkörnern über SO₃ zu Schwefelsäure umgewandelt, und gleichzeitig bzw. parallel wird Kohlendioxid zu Kohlenstoff und Sauerstoff aufgespalten. Ein Teil des Kohlenstoffs wird jedoch auch an Schwefelverbindungen angelagert.

Das Verfahren wurde unter folgenden Bedingungen erfolgreich getestet:
- Wassersättigung der Abgase vor Eintritt in den Reaktor durch Quenchen.
- SO₂ Gehalt der Rauchgase zwischen 300 ppm und 6000 ppm. Hierbei sei bemerkt dass im Idealfall und im kontinuierlichen Betrieb nur 174 bis 3480 ppm von diesem SO₂ bei der CO₂-Umwandlung umgesetzt werden können. Der Überschuss an SO₂ wird in diesem Fall für die H₂SO₄ Säurebildung benutzt resp. in Form SO₂/SO₃ in die Atmosphäre abgegeben.
- CO₂ Gehalt der Rauchgase zwischen 0,1 Vol.% (1000 ppm) und 15 Vol.% (150 000 ppm).
- Gastemperatur zischen 10 und 80°C.
- O₂-Gehalt etwa 20 Vol%
- Wassersättigung und Kühlung der Abgase durch Quenchen
- Getestete Katalysatoren wurden von der Firma NORIT Nederland B.V. aus Postbus 105 NL-3800 AC Amersfoort unter den Bezeichnungen Norit_PK1-3, Norit_PK_2-4und Norit_PK_3-5 zur Verfügung gestellt.

Bei diesen Katalysatoren handelt es sich um ein Aktivkohlegranulat, mit einer Körnung zwischen 1-3 mm; 2-4 mm bzw. 3-5 mm und durch Dampfaktivierung hergestellt wurde. Folgende allgemeine Eigenschaften werden vom Hersteller zugesichert: Jodzahl 800; Methylenblauadsorption 11 g/100 g; Innere Oberfläche (B.E.T) 875 m²/g; Schüttdichte 260 kg/m³; Dichte nach Rückspülen 230 kg/m³; Gleichförmigkeitsgrad 1,3 - Aschegehalt 7 Gew.-%; pH alkaline; Feuchte (verpackt) 2 Gew.-%

Bei den Versuchen wurden Rauchgasanalysegeräte der Marke Testo verwendet. Die Geräte sind neuester Generation (Baujahr 2009) und wurden vom Hersteller kalibriert. Außerdem wurden bei den Versuchen die Analysedaten dieser Rauchgasanalysegeräte mit parallel durchgeführten nasschemischen Messungen bestätigt. Die Ergebnisse lagen für alle Messungen in den zulässigen Abweichungstoleranzen.

Der Ablauf der SO₂-Umsetzung nach H₂SO₄ auf der Katalysatoroberfläche verläuft formal nach der Summenformel:

SO₂ + ½ O₂ + n H₂O (katalytisch)→ H₂SO₄ + (n-1) H₂O

Ohne sich auf eine Theorie festlegen zu wollen, wird angenommen, dass:
- O₂ und SO₂ zu den aktiven Zentren des Katalysators wandert und hier zu SO₃ umgewandelt wird.
- SO₃ aus den aktiven Zentren des Katalysators heraus wandert und mit der wässrigen Umhüllung um das Katalysatorkorn H₂SO₄ bildet.
- SO₂ mit Sauerstoff und Wasser unter Bildung von Schwefelsäure gemäß vorstehender Reaktionsgleichung reagiert,
- das CO₂ Molekül, das ungefähr die gleiche Größe hat wie ein SO₂ Molekül ebenfalls in die Poren des Katalysatorkorns transportiert wird und dort durch zuführen der Bildungsenergien getrennt resp. an Schwefelverbindungen adsorbiert wird Die konzentrierte Schwefelsäure welche sich in der wässrigen Hülle um das Korn bildet adsorbiert durch hohe Oberflächenspannungen (spezifische Oberfläche) den C-Anteil von CO₂ und O₂. Es entstehen sogenannte Kohlenstoff-Schwefelverbindungen.
Folgende Reaktionen finden u.a. statt:

CO₂ + SO₂ + H₂O → C + H₂SO₄ + ½ O₂

H₂SO₄ + CO₂ → SCO₃ + H₂O + O₂

- der an einer Schwefelverbindung befindliche C-Teil innerhalb der Schwefelsäure als Suspension vorhanden ist,
- der Austrag der gebildeten Kohlenstoffverbindungen in einer Suspension mit der Schwefelsäure aus dem Katalysator durch Waschen mit Wasser erfolgt, wobei die Schwefelsäure verdünnt wird. Der gebildeten Kohlenstoffverbindungen fallen nach kurzer Zeit aus.

Zum Waschen des Katalysators kann enthärtetes bzw. entsalztes Wasser verwendet werden.

Es wird angenommen, ohne sich jedoch auf eine Theorie festlegen zu wollen, dass die Adsorption von CO₂ durch die Ausnutzung der thermischen Energie, die durch die Oxidation von SO₂ zu SO₃ und/oder bei der Bildung der Schwefelsäure (SO₃- H₂SO₄) erzeugt wird erfolgt. Die exotherme Energie, die bei der Oxidation freigesetzt wird beträgt ΔHR= - 98,77 kJ/mol, bei der Bildung der Schwefelsäure beträgt diese ΔHR= - 132,23 kJ/mol; insgesamt steht also eine exotherme Energie von ΔHR Gesamt= - 231 kJ/mol zur Verfügung. Die Energie von + 394,4 kJ/mol, die zum Umwandeln von CO₂ benötigt wird, kann aus einer exothermen Reaktion, von SO₂ zu SO₃, bezogen werden oder es kann aus den zwei exothermen Reaktionen, SO₂ zu SO₃ zu H₂SO₄, bezogen werden. Dies bedeutet, dass eine exotherme Energie zwischen -98,77 kJ/mol und -231 kJ/mol zur Verfügung steht.

Im Idealfall, d.h. ohne Energieverluste, kann man dementsprechend bei der Oxidation zu SO₃ pro Mol SO₂ also 0,25 Mol CO₂ umsetzen. Wird jedoch zusätzlich Säure erzeugt, so kann im Idealfall pro Mol SO₂ 0,58 mol CO₂ umgesetzt werden, bzw. pro kg SO₂ 0.39kg CO₂ umsetzen und gleichzeitig 1.53 kg H₂SO₄ erzeugen. Man muss jedoch berücksichtigen dass auch noch andere Reaktionen stattfinden (können) sowie z.B die oben beschriebene Bildung von Schwefel-Kohlenstoffverbindungen.

Die oben genannten Reaktionen der CO₂ Abscheidung kann erst nach Erreichen eines gewissen Sättigungsgrades mit SO₂ in den Poren des Katalysators in Bezug auf die Schwefelsäurebildung ablaufen. Dieses Gleichgewicht tritt im Reaktor auf, nachdem genug SO₂ zu SO₃ umgesetzt worden ist und beginnt Schwefelsäure zu bilden. Ein solcher Zustand stellt sich je nach Fahrweise (SO₂/SO₃ Aufgabemenge) nach ca. 20 bis 100 Betriebsstunden ein. Dieser Zustand ist von der %-Gew. Säurebildung unabhängig. Aus diesem Grund kann dieser Prozess auch bei verschiedenen %-Gew. (H₂SO4) Säuren ablaufen. Beispiel: Bei einer 100%-ige Abscheidung von SO₂ im CO₂-Prozess entspricht dies einer Umwandlung von 40-60% von SO₂ in H₂SO₄ und sowie 60-40% von SO₂ in Schwefelkohlenstoffverbindungen.

### Versuch 1

Die Versuche wurden folgenden Bedingungen durchgeführt:

| | | | |
|---|---|---|---|
| Rohgasvolumenstrom | min. | 200 | m³/h |
| | max. | 300 | m³/h |
| CO₂-Gehalt (Eintritt) | Min | 0,20 | Vol-% |
| | max | 1,50 | Vol-% |
| SO₂-Gehalt (Eintritt) | min. | 300 | ppm |
| | max. | 4.500 | ppm |
| Temperatur Abgas | Min. | 10 | °C |
| | Max. | 12 | °C |
| Taupunkttemperatur | Gesättigt | | |
| O₂-Gehalt | | >20 | Vol-% |

Der Reaktor ist aus glasfaserverstärktem Kunststoff, hat ein Volumen von ca 2 m³ und ist mit 1 m³ eines Aktivkohlekatalysators vom Typ Norit_PK_2-4 befüllt.

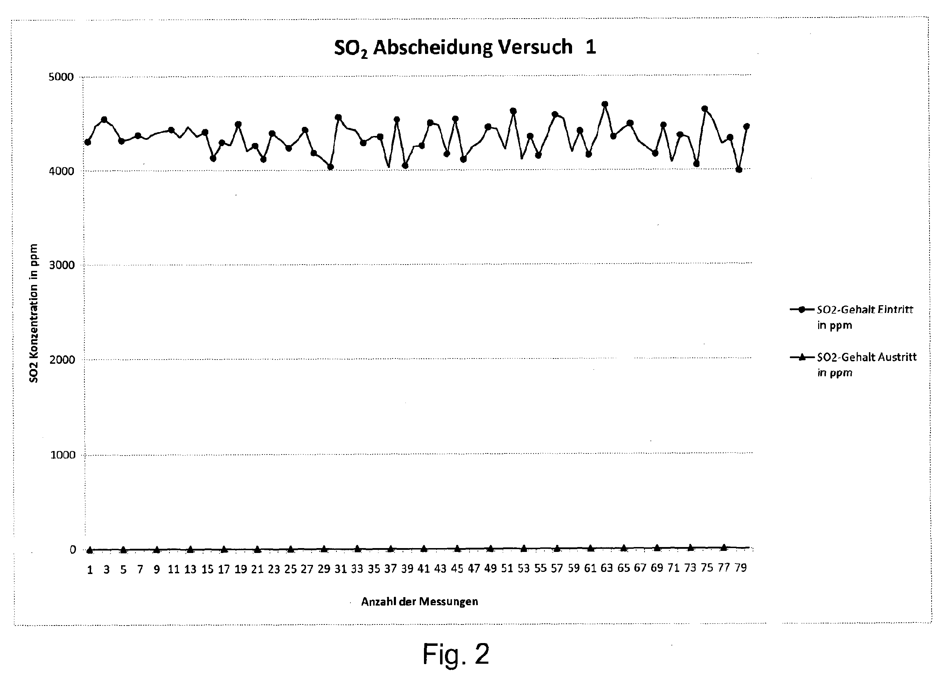

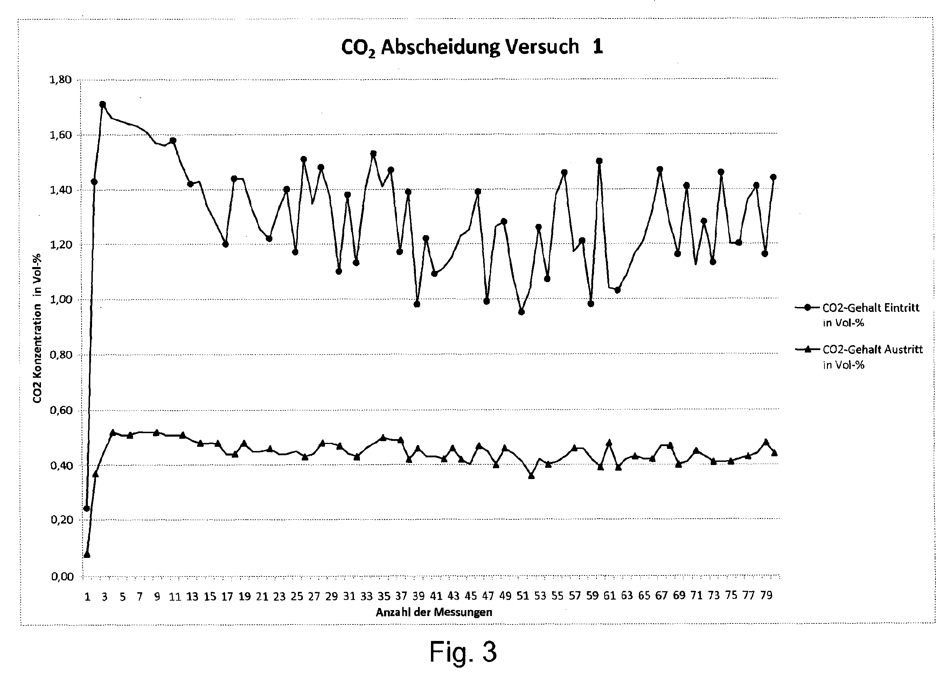

In einer ersten Phase wurde die Versuchsanlage ca 50 Stunden unter Zugabe von SO₂ aus Gasflaschen gefahren, hierbei wurde zwischen 3.000-4.000 ppm SO₂ aufgegeben. Insgesamt wurde der Reaktor mit ca. 45 kg SO₂ (ca. 45 kg SO₂/m³ Katalysator) beladen. Gemäß diesem Test erfolgte die Wasseraufgabe von 2 bis 15 I/Stunde in aufgeteilt in 1 bis 4 Portionen/Stunde. Hierbei wurde entgegen dem SULFACID Prozess keine nennenswerte Schwefelsäure Konzentration erreicht (4-6 Gew-%). Nach ca. 40 Stunden (ca. 36 kg SO₂/m³ Katalysator) gelang die Abreinigung von CO₂. Der SO₂ und der CO₂ Gehalt der Abgase wurde wie in der Fig. 1 dargestellt jeweils am Eintritt und am Austritt des Reaktors gemessen. Die Messungen erfolgten alle 30 Sekunden und wurden auf den Figuren 2 und 3 graphisch dargestellt. Die ersten, hier dargestellten Messungen erfolgten nach Sättigung des Katalysators d.h. 40 Stunden nach Inbetriebnahme des Reaktors. Die CO₂ Konzentration wurde zwischen 1,0 Vol % und 1,55 Vol% mehrfach variiert und es wurde festgestellt dass die Abreinigungswerte von CO₂ im Schnitt kleiner als 60% waren. Der Testversuch verlief kontinuierlich über ca. 40 Minuten. Über diesen gesamten Zeitraum enthielten die behandelten Abgase kein SO₂ mehr, wie aus der Fig. 3 ersichtlich ist.

Bei einer Überbeladung des Akitvkohlekatalysators mit SO₂ kann die CO₂-Umsetzung entweder nur teilweise oder gar nicht stattfinden. Auch sollte dem Verfahren nicht zu viel Wasser zugegeben werden da sonst die Umwandlung von CO₂ verringert wird zu Gunsten von einer H₂SO₄ Umwandlung oder vermehrt SO₂/SO₃ in die Abluft gegeben wird. Hierzu sei bemerkt, dass bei einem klassischen SULFACID Prozess sehr viel größere Mengen an Wasser zugegeben werden. Als Beispiel würden bei einem vergleichbaren SULFACID Prozess regelmäßig alle 15 Minuten ca. 8-10 Liter aufgegeben (32-40 I/Stunde/m³ Katalysator). Im Gegensatz dazu wird beim CO₂ Prozess jede Stunde maximal 15 Liter (in der Regel eher 8 Liter) in unregelmässigen Abständen aufgegeben.

### Versuch 2

| | | | |
|---|---|---|---|
| Rohgasvolumenstrom | min. | 200 | m³/h |
| | max. | 300 | m³/h |
| CO₂-Gehalt | Min | 0,30 | Vol-% |
| | Max | 1,00 | Vol-% |
| SO₂-Gehalt (Eintritt) | min. | 300 | ppm |
| | max. | 500 | ppm |
| Temperatur Abgas | Min. | 70 | °C |
| | Max. | 80 | °C |
| Taupunkttemperatur | Gesättigt | | |
| O₂-Gehalt | | >20 | Vol-% |

Der Reaktor ist aus glasfaserverstärktem Kunststoff und hat ein Volumen von ca. 2 m³. und ist mit 0,3 m³ eines Katalysators vom Typ Norit_PK_2-4 befüllt.

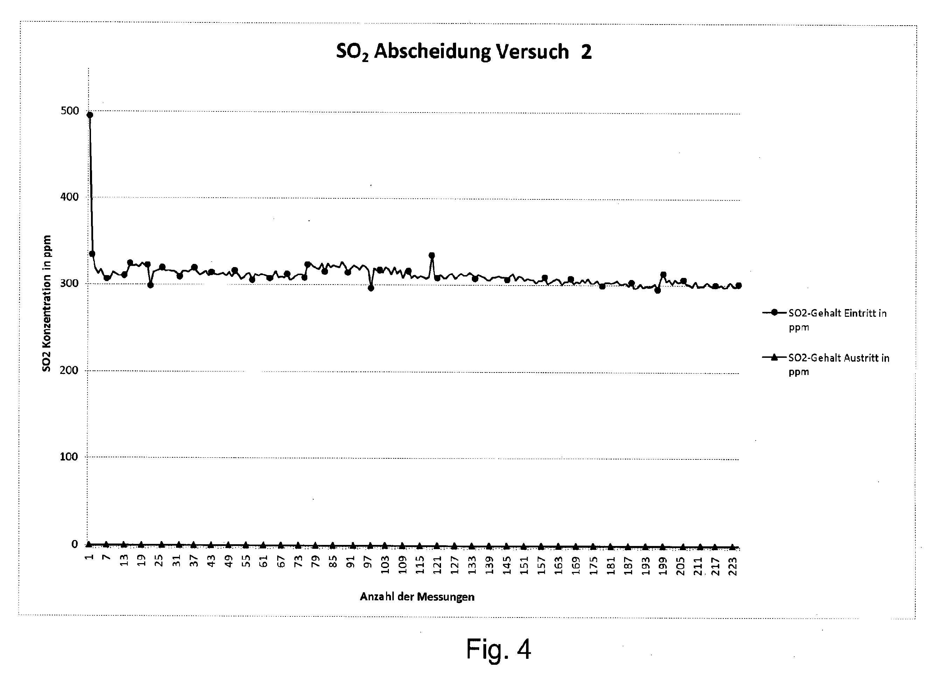

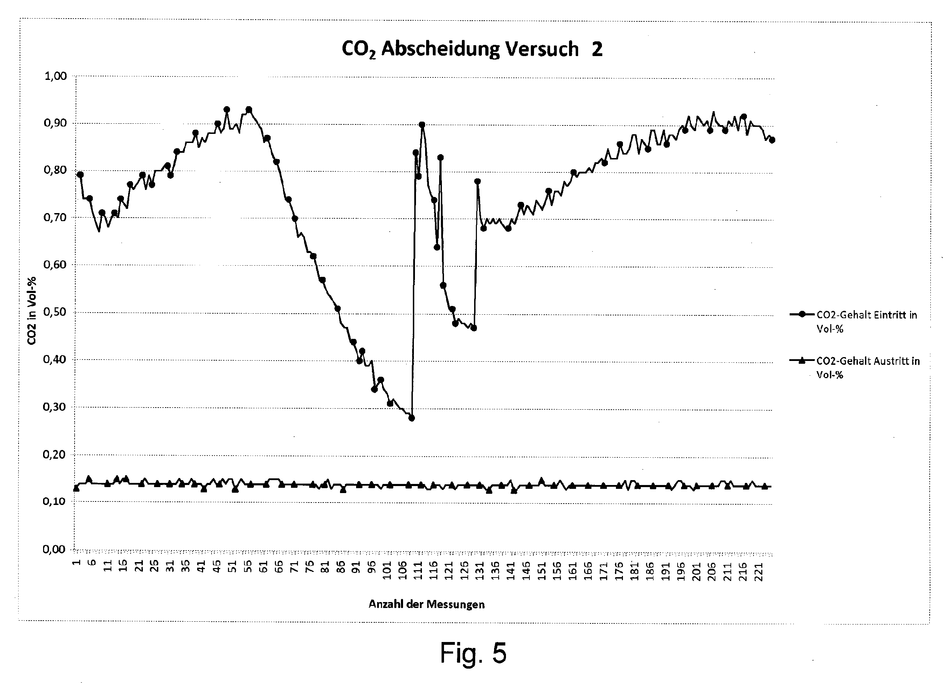

In einer ersten Phase wurde die Versuchslage ca 50 Stunden unter Zugabe von SO₂ aus Gasflaschen gefahren, hierbei wurde zwischen 300-500 ppm SO₂ wegen der geringeren Katalysatorfüllung aufgegeben. Insgesamt wurde der Reaktor mit ca. 15 kg SO₂ beladen (ca. 50 kg SO₂/m³ Katalysator). Gemäß diesem Test erfolgte die Wasseraufgabe antizyklisch. In 1 bis 4 Portionen/Stunde wurden zwischen 2 und 5 l/ Stunde aufgegeben d.h. 6.6 bis 16.6 I/Stunde/m³ Katalysator. Hierbei wurde entgegen dem Sulfacid Prozess keine nennenswerte Konzentration an Schwefelsäure erreicht (1-2 Gew-%). Erst nach ca. 40 Stunden (ca. 40 kg SO₂/m³ Katalysator gelang die Abreinigung von CO₂. Der SO₂ und der CO₂ Gehalt der Abgase wurde wie in der Fig. 1 dargestellt jeweils am Eintritt und am Austritt des Reaktors gemessen. Die Messungen erfolgten alle 30 Sekunden und wurden auf den Figuren 4 und 5 graphisch dargestellt. Die ersten, hier dargestellten Messungen erfolgten nach Sättigung des Katalysators d.h. 40 Stunden nach Inbetriebnahme des Reaktors. Die CO₂ Konzentration wurde zwischen 0.8 Vol % und 0.3 Vol% mehrfach variiert und es wurde festgestellt dass die Abreinigungswerte von CO₂ von über 85 % erreicht wurden. Der Testversuch verlief kontinuierlich über ca. 2 Stunden. Über diesen gesamten Zeitraum wurde gleichzeitig eine nahe 100 %-ige Umwandlung von SO₂ erreicht, wie aus der Fig. 3 ersichtlich ist.

Die Versuche, die im Zusammenhang mit dieser Erfindung durchgeführt wurden, haben ergeben, dass ein gewisser Sättigungsgrad des Katalysators mit SO₂ vorhanden sein muss um ein Starten der CO₂ Abscheidung zu erreichen (siehe Versuche) ).Bis zum Erreichen dieses Sättigungsgrades läuft die CO₂ Abscheidung gar nicht oder teilweise mit einer geringeren Abscheideleistung wie in Versuch 1. Es wird angenommen, dass die hierbei adsorbierte Menge an O₂ in positiver Weise die SO₂/SO₃ Umsetzung in H₂SO₄ beeinträchtigt, sodass auch weniger SO₂/SO₃ aus dem Reaktor abgegeben wird ggf. höhere Mengen an SO₂/SO₃ abgeschieden werden können. Im Gegensatz zum SULFACID Prozess wird die exotherme Energie ausgenutzt um das CO₂ zu trennen und wird nicht an die wässrige Umhüllung im Bett abgegeben.

Ein wichtiges Kriterium CO₂ abscheiden zu können liegt im Abreinigungsfaktor von SO₂ des Katalysators. Bei einem normalen kontinuierlichen Betrieb für SO₂-Umwandlung in H₂SO₄ (in SULFACID-Betrieb) liegt er bei 0,7 und 0,9. Dieser Tatsache bedingt erfolgt auch eine Säurekonzentration von 10-15 Gew-%. Für CO₂-Abscheidung ist der SO₂ Abreinigungsfaktor des Katalysators geringer. Aus den Testversuchen hat sich hier eine SO₂-Umwandlung in H₂SO₄ von 0,4 und 0,6 ergeben welches darauf hindeutet, dass etwa 40-60% vom SO₂ in H₂SO₄ umgesetzt werden. Dies bestätigt auch die Tatsache, dass die Säurekonzentration in diesen Fällen zwischen 1 und 6 Gew-% liegt.

### Zeichenerklärung Versuchsreaktor 10:

- 10: Versuchsreaktor
- 12: unteren Teil
- 14: oberen Teil
- 16: Heizgerät
- 18,20: Druckflasche
- 22,24: Ventile
- 26: erstes Messgerät
- 28: Quenche
- 30: Abgasgebläse
- 32: Aktivkohlekatalysator
- 34: zweiten Messgerät
- 36: Vorratsbehälter
- 38: Dossiergerät
- 40: Pumpe
- 42: Behälter
- 44: Messgeräts
- 46: Pumpe
- 48: Messgerät

## Patentansprüche

1. Verfahren zur katalytischen Entfernung von Schwefeldioxid und Kohlendioxyd aus Abgasen in einem, mit einem Aktivkohlekatalysator beaufschlagten Reaktor, **gekennzeichnet, durch** die folgenden Schritte:
• Sättigung der Aktivkohle mit SO₂,
• Sättigung oder Teilsättigung der Abgase mit Wasser,
• Einführung der Abgase in den Reaktor,
• katalytische Umwandlung des SO₂ in H₂SO₄ und parallel dazu die katalytische Umwandlung am selben Katalysator von CO₂ in C und O₂ sowie in Schwefel-Kohlenstoffverbindungen.
• Auswaschen des Katalysators und Austragen des H₂SO₄ als Flüssigkeit und des C als Feststoff und/oder an Schwefelverbindungen gebunden.

2. Verfahren nach Anspruch 1, **dadurch gekennzeichnet, dass** das Verhältnis von SO₂ und CO₂ in den Abgasen zwischen 0,25 und 0,58 mol/mol liegt.

3. Verfahren nach Anspruch 1 oder 2, **dadurch gekennzeichnet, dass** die Eingangstemperatur der Abgase zwischen der Umgebungstemperatur und 150° C liegt.

4. Verfahren nach einem der Ansprüche 1 bis 3, **dadurch gekennzeichnet, dass** der O₂-Gehalt der Abgase mindestens 5 Vol.% beträgt.

5. Verfahren nach einem der Ansprüche 1 bis 4, **dadurch gekennzeichnet, dass** der O₂-Gehalt mehr als 8 mal höher als der SO₂-Gehalt liegt.

6. Verfahren nach einem der Ansprüche 1 bis 5, **dadurch gekennzeichnet, dass** die Sättigung der Abgase mit Wasser durch Quenchen erfolgt.

7. Verfahren nach einem der Ansprüche 1 bis 6, **dadurch gekennzeichnet, dass** enthärtetes oder entsalztes Wasser zum Auswaschen des Katalysators verwendet wird.

8. Verfahren nach einem der Ansprüche 1 bis 7, **dadurch gekennzeichnet, dass** das Auswaschen des Katalysators im Gleichstrom oder im Gegenstrom zu den Abgasen erfolgt.

9. Verfahren nach einem der Ansprüche 1 bis 8, **dadurch gekennzeichnet, dass** der SO₂ Abreinigungsfaktor des Katalysators zwischen 0,4 und 0,6 liegt.

## Claims

1. Method for the catalytic removal of sulphur dioxide and carbon dioxide from waste gases in a reactor charged with an activated carbon catalyst, **characterised by** the following steps:
➢ saturating the activated carbon with SO₂,
➢ saturating or partially saturating the waste gases with water,
➢ introducing the exhaust gases into the reactor,
➢ catalytically converting the SO₂ into H₂SO₄ and, in parallel with this, catalytically converting CO₂ into C and O₂ and into sulphur-carbon compounds on the same catalyst,
➢ washing out the catalyst and discharging the H₂SO₄ as a liquid and the C as a solid or/and bound to sulphur compounds.

2. Method according to claim 1, **characterised in that** the ratio of SO₂ and CO₂ in the waste gases is between 0.25 and 0.58 mol/mol.

3. Method according to either claim 1 or claim 2, **characterised in that** the inlet temperature of the waste gases lies between the ambient temperature and 150 °C.

4. Method according to any one of claims 1 to 3, **characterised in that** the O₂ content of the waste gases is at least 5 % by volume.

5. The method according to any one of claims 1 to 4, **characterised in that** the O₂ content is more than 8 times greater than the SO₂ content.

6. Method according to any one of claims 1 to 5, **characterised in that** the waste gases are saturated with water by quenching.

7. Method according to any one of claims 1 to 6, **characterised in that** softened or demineralised water is used to wash out the catalyst.

8. Method according to any one of claims 1 to 7, **characterised in that** the catalyst is washed out in co-current flow with or in counterflow to the waste gases.

9. Method according to any one of claims 1 to 8, **characterised in that** the S02 purifying factor of the catalyst is between 0.4 and 0.6.

## Revendications

1. Procédé pour l'élimination catalytique de dioxyde de soufre et de dioxyde de carbone d'effluents gazeux dans un réacteur chargé de catalyseur à base de charbon actif, **caractérisé par** les étapes suivantes :
- saturation du charbon actif en SO₂,
- saturation ou saturation partielle des effluents gazeux en eau,
- introduction des effluents gazeux dans le réacteur,
- conversion catalytique du SO₂ en H₂SO₄ et parallèlement conversion catalytique, sur le même catalyseur, de CO₂ en C et O₂ ainsi qu'en composés soufre-carbone.
- lavage du catalyseur et évacuation du H₂SO₄ sous forme liquide et du C sous forme solide et/ou lié à des composés soufrés.

2. Procédé selon la revendication 1, **caractérisé en ce que** le rapport de SO₂ et de CO₂ dans les effluents gazeux se situe entre 0,25 et 0,58 mole/mole.

3. Procédé selon la revendication 1 ou 2, **caractérisé en ce que** la température des effluents gazeux à l'entrée se situe entre la température ambiante et 150°C.

4. Procédé selon l'une quelconque des revendications 1 à 3, **caractérisé en ce que** la teneur en O₂ des effluents gazeux vaut au moins 5% en volume.

5. Procédé selon l'une quelconque des revendications 1 à 4, **caractérisé en ce que** la teneur en O₂ est plus de 8 fois supérieure à la teneur en SO₂.

6. Procédé selon l'une quelconque des revendications 1 à 5, **caractérisé en ce que** la saturation des effluents gazeux a lieu avec de l'eau par refroidissement brusque.

7. Procédé selon l'une quelconque des revendications 1 à 6, **caractérisé en ce qu'**on utilise de l'eau adoucie ou déminéralisée pour le lavage du catalyseur.

8. Procédé selon l'une quelconque des revendications 1 à 7, **caractérisé en ce que** le lavage du catalyseur a lieu en courant parallèle ou à contre-courant par rapport aux effluents gazeux.

9. Procédé selon l'une quelconque des revendications 1 à 8, **caractérisé en ce que** le facteur de purification de SO₂ du catalyseur se situe entre 0,4 et 0,6.
